# EUROPÄISCHE PATENTSCHRIFT

(11) **EP 1 759 840 B1**
(45) Veröffentlichungstag und Bekanntmachung des Hinweises auf die Patenterteilung: **04.08.2010**
(21) Anmeldenummer: 06121400.3
(22) Anmeldetag: 25.01.2006
(51) Int. Cl.: B41F 13/004, B41F 13/008, B41F 13/14

(54) **Verfahren zum reproduzierbaren Festlegen der räumlichen Winkellage mindestens eines Zylinders einer Druckmaschine.**
Method for reproducibly determining the spatial angular position of at least a cylinder of a printing machine.
Procédé pour déterminer de façon reproductible la position angulaire spatiale d'au moins un cylindre d'une machine d'impression.

(30) Priorität: 07.05.2005 DE 102005021217
(43) Veröffentlichungstag der Anmeldung: 07.03.2007
(62) Teilanmeldung aus: 06100808.2
(73) Patentinhaber: Koenig & Bauer Aktiengesellschaft, 97080 Würzburg (DE)
(72) Erfinder: Koblinger, Michael, 97225 Zellingen (DE); Röthlein, Ewald, 97282, Retzstadt (DE)

(56) Entgegenhaltungen:
- EP-A- 0 930 158
- EP-A- 0 934 826
- DE-U1- 29 813 132
- GB-A- 2 069 660
- JP-A- 5 064 882
- US-A- 4 354 769
- US-A- 4 527 788

## Beschreibung

Die Erfindung betrifft ein Verfahren zum reproduzierbaren Festlegen der räumlichen Winkellage mindestens eines Zylinders einer Druckmaschine gemäß dem Oberbegriff des Anspruchs 1.

Für eine winkelsynchrone Steuerung mehrerer unabhängig voneinander angetriebener Zylinder in einer Druckmaschine benötigt die Antriebssteuerung zu jeder Zeit die genaue Winkellage der einzelnen Zylinder. Diese Winkellage erhält die Motorsteuerung von Winkelgebern ("Multiturngebern"), die jedoch z. B. aufgrund von Getriebeübersetzungen im Antrieb nicht unmittelbar die Winkellagen der Zylinder wiedergeben. Die jeweilige Winkellage der Zylinder kann in diesem Fall nur unter Berücksichtigung des genauen Übersetzungsverhältnisses von der Antriebssteuerung fortlaufend neu errechnet werden.

Aus diesem Grunde ist es notwendig, den Zylindern eine reproduzierbare mechanische "Nullstellung" bzw. Referenzwinkellage zuzuordnen, mit der ein Abgleich von Zylinderlage und Winkelgeber möglich ist. Über diese Referenzwinkellage und die Winkelgebersignale ist dann die Antriebssteuerung in der Lage, zu jedem Zeitpunkt die aktuelle Zylinderlage zu berechnen und eine winkelsynchrone Steuerung mehrerer Zylinder durchzuführen.

Es soll also der Absolutwert der Winkellage eines Zylinders oder zweier oder mehrerer Zylinder zueinander bestimmt bzw. die Zylinder entsprechend ausgerichtet werden, um die Anbindung von mechanischen Drehwinkelsynchronisationseinrichtungen wie Zahnrädern oder elektronischen Drehwinkelsynchronisationseinrichtungen wie Winkelsensoren zu ermöglichen, ohne die Drehwinkelsynchronisationseinrichtungen in einem bestimmten Winkel an die Zylinder anbinden zu müssen.

Es sind Vorrichtungen bekannt, bei denen ein Synchronlauf zweier oder mehrerer Zylinder in einer genau festgelegten Winkellage zueinander über das Anbinden von Zahnrädern erreicht wird, die hierzu in ihrer Winkellage über Markierungen, z. B. Passfedernuten in Zahnrad und Zylinderzapfen, exakt zum Zylinder und den anderen eingreifenden Zahnrädern ausgerichtet werden müssen.

Passfedernutsysteme sind in ihrer Herstellung relativ kostspielig (Einbringen mehrerer Nuten in exakter Winkellage in mehreren Teilen), schränken in der konstruktiven Freiheit ein und können den Rundlauf empfindlicher Systeme stören. Weiterhin sind Passfedernutsysteme hinsichtlich ihrer Winkellage in der Regel nicht spielfrei. Schließlich sind Ausrichtsysteme von Zahnrädern zum Zylinder in der Regel im Getriebekasten mit enthalten, so dass deren Kontrolle und Anwendung einen hohen Montageaufwand bedeutet.

Aus der EP 03 18 959 B1 ist ein Antriebssystem einer Rotationsdruckmaschine bekannt, wobei ein Plattenzylinder für das Auflegen von Platten ausgerichtet und nach dem Plattenauflegen wieder in den Antriebsstrang eingekuppelt wird, wobei Phasenabweichungen korrigiert werden. Das Einstellen einer "Nullstellung" ist hier nicht angesprochen.

Die EP 07 10 556 B1 bezieht sich auf eine sich wiederholende Positionierungssicherstellung des Lagewinkels des Plattenzylinders zu einem Plattenaufleger, um die Funktion des Plattenauflegers zu sichern.

Die WO 02/076743 A1 offenbart Antriebe für Druckwerke mit Zahnrädern, die drehfest mit den Zapfen der zugeordneten Zylinder verbunden sind.

Die DE 299 02 083 U1 und die DE 298 13 132 U1 offenbaren Vorrichtungen zum reproduzierbaren Festlegen von räumlichen Winkellagen von Zylindern in Druckmaschinen.

Die US 5 195 838 A beschreibt eine reibschlüssige hydraulische Spannvorrichtung zum Fixieren eines Zahnrades in einer festlegbaren Position auf einem Zapfen eines Zylinders einer Druckmaschine.

Durch die US 4 527 788 A und die JP 05-064882 A sind Verfahren zum Referenzieren von Antrieben in Verarbeitungsmaschinen mittels Sensoren bekannt.

Die EP 0 934 826 A1 und die EP 0 930 158 A1 beschreiben Referenzierverfahren für Druckmaschinen. Dabei wird ein Gummizylinder mechanisch fixiert und anschließend dessen aktuelle Position eingelesen.

Der Erfindung liegt die Aufgabe zugrunde, ein Verfahren zum reproduzierbaren Festlegen der räumlichen Winkellage mindestens eines Zylinders einer Druckmaschine zu schaffen.

Diese Aufgabe wird erfindungsgemäß durch die Merkmale des Anspruchs 1 gelöst.

Die mit der Erfindung erzielbaren Vorteile bestehen insbesondere darin, dass nunmehr sowohl bei der Maschinenmontage als auch beim späteren Kundenbetrieb eine günstige, einfache, schnelle und genaue Winkellagenbestimmung der Zylinder ermöglicht wird, um die antriebsseitige Winkelsynchronisierung der Zylinder schnell und kostengünstig, ohne Ausrichtsystem zu ermöglichen. Im falle der Erfindung können somit im Gegensatz zum Stand der Technik Synchronisierungseinrichtungen für einen oder mehrere Zylinder ohne deren Ausrichtung auf die betroffenen Zylinder angebunden oder ausgewechselt werden. Weiterhin ist es mit dem Ausrichtsystem nicht erforderlich, zwischen separat angetriebenen und gemeinsam angetriebenen Zylindergruppen bzw. Zylindereinheiten zu unterscheiden, so dass eine Reduzierung der Lösungsvarianten erreicht werden kann. Auch ist das vorgeschlagene Ausrichtkonzept vollkommen unabhängig vom jeweiligen Antriebskonzept.

Im Falle der Erfindung ist somit eine Ausrichtvorrichtung vorgesehen, über die die Zylinder zueinander bzw. zu einem ortsfesten Punkt außerhalb des Zylinders in gewünschte, wiederholbare Referenzwinkellagen gebracht werden und hier z. B. formschlüssig fixiert bzw. über einen Anschlag in ihrer Lage gehalten werden.

Im Falle von mechanisch synchronisierten Zylindern ist es dann möglich, z. B. Synchronisationszahnräder in beliebiger Winkellage an den Zylinder anzubinden, z. B. mittels Ringspannelementen, und trotzdem eine exakte Winkelsynchronisierung der Zylinder, sowohl absolut als auch zueinander, zu erhalten.

Bei steuerungstechnisch synchronisierten Zylindern kann die Referenzwinkellage bzw. "ist"-Winkellage eines jeden Zylinders über angebundene, meist im Elektromotor enthaltene Winkelmesseinrichtungen als Referenz- bzw. Basiswinkellage z. B. in der Antriebssteuerung gespeichert werden. Durch die konstruktiv bekannten theoretischen Winkellagen der Zylinder bzgl. deren Ausrichtposition zueinander und absolut können dann die Zylinder über die Antriebssteuerung in beliebige Winkellagen zueinander und absolut gedreht und so je nach Wunsch mit vorgewählten Winkellagen zueinander und absolut winkelsynchron oder in beliebigen Asynchronverhältnissen zueinander betrieben werden.

Eine spätere Kontrolle der bereits früher eingestellten Referenzwinkellagen ist mittels derselben Ausrichtvorrichtungen ebenfalls leicht und schnell möglich.

In bevorzugter Weiterbildung der Erfindung ist im Randbereich des auszurichtenden Zylinders, also an einer meist ungenutzten und gut zugänglichen Stelle des Zylinders, in definierter Position eine sich in radialer Richtung erstreckende Passbohrung vorgesehen, in die z. B. Passbolzen bzw. Passstangen oder Lehren einsetzbar sind. Der Zylinder mit dem eingesetzten Passbolzen wird dann so weit gedreht, bis der Passbolzen z. B. am benachbarten Zylinder oder einem anderen Bauteil innerhalb der Maschine anschlägt, wodurch die Referenzwinkellage erreicht wird, oder aber es werden zwei oder mehr benachbarte Zylinder in eine solche Winkellage (Referenzwinkellage) zueinander gebracht, dass eine Lehre in die Passbohrungen eingesetzt oder auf in die Passbohrungen eingesetzte Passbolzen aufgesetzt werden kann. Hierdurch ist auf sehr einfache und präzise Weise eine Bestimmung der Referenzwinkellage möglich mit einer Genauigkeit von beispielsweise +/- 0,2 mm und einer Wiederholgenauigkeit von beispielsweise +/- 0,05 mm.

Ausführungsbeispiele der Erfindung sind in den Zeichnungen dargestellt und werden im Folgenden näher beschrieben.

Es zeigen:
- Fig. 1: eine schematische Darstellung zur Erläuterung der Ermittlung der Referenzwinkellage bei einem Druckwerk mit zwei unabhängig voneinander angetriebenen Druckzylindern;
- Fig. 2: ein erstes Ausführungsbeispiel der Ausrichtvorrichtung gemäß der Erfindung mit einem Passbolzen;
- Fig. 3: ein zweites Ausführungsbeispiel der Ausrichtvorrichtung gemäß der Erfindung mit zwei Passbolzen;
- Fig. 4: ein drittes Ausführungsbeispiel der Ausrichtvorrichtung gemäß der Erfindung mit einer Lehre;
- Fig. 5: ein viertes Ausführungsbeispiel der Ausrichtvorrichtung gemäß der Erfindung mit einer Lehre;
- Fig. 6: ein fünftes Ausführungsbeispiel der Ausrichtvorrichtung gemäß der Erfindung mit zwei aneinander anschlagenden Passbolzen;
- Fig. 7: eine perspektivische Darstellung der Befestigung der Zahnräder auf den Zapfen der Zylinder eines Druckwerks;
- Fig. 8: einen Schnitt durch einen Zapfen und ein Zahnrad eines Zylinders des Druckwerks nach Fig. 7;
- Fig. 9: eine Druckeinheit mit zwei Druckwerken bzw. Zylinderpaaren;
- Fig. 10: eine Druckeinheit mit einem Druckwerk und einem Gegendruckzylinder.

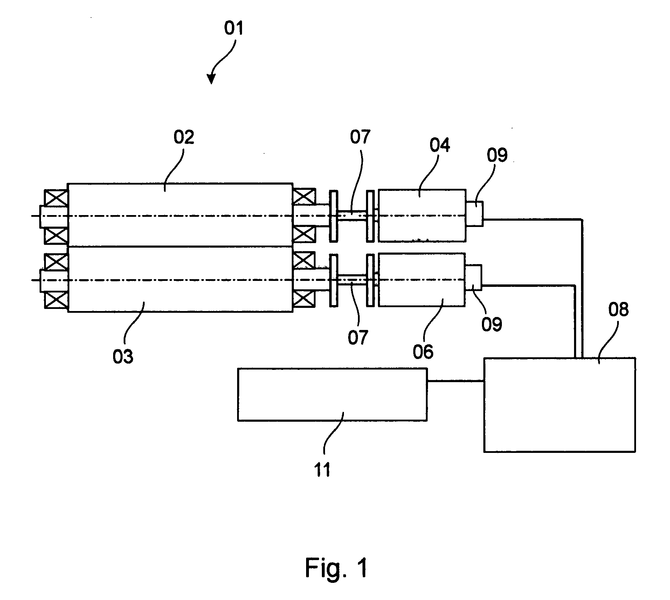

Zunächst wird auf Fig. 1 Bezug genommen. Das dort beispielsweise gezeigte Druckwerk 01 umfasst Zylinder 02; 03, denen jeweils ein eigener wellenloser Antrieb 04; 06, z. B. Elektromotor 04; 06 zugeordnet ist, wobei zwischen jedem Antrieb 04; 06 und dem zugeordneten Zylinder 02; 03 eine Kupplung 07 vorgesehen ist. Über eine Antriebssteuerung 08 sind die Zylinder 02; 03 winkelsynchron antreibbar.

Den Antrieben 04; 06 ist jeweils ein Winkelgeber 09, z. B. ein Multiturngeber 09 zugeordnet, der der Antriebssteuerung 08 fortlaufend Daten zur Winkellage der beiden Zylinder 02; 03 liefert. Aus diesen Daten zur Winkellage errechnet die Antriebssteuerung 08 unter Berücksichtigung weiterer, insbesondere konstruktiver Daten permanent die tatsächliche aktuelle Winkellage der beiden Zylinder 02; 03 und regelt die Antriebe 04; 06, insbesondere relativ zu einer "virtuellen Leitachse" entsprechend.

Wie eingangs erläutert, ist es jedoch erforderlich, den Zylindern 02; 03 zunächst eine reproduzierbare mechanische Nullstellung bzw. Referenzwinkelposition zuzuordnen. Dies wird erreicht, indem unter Verwendung der im Nachfolgenden beschriebenen Ausrichtvorrichtung die Zylinder 02; 03 auf eine vorgegebene feste räumliche Lage fixiert werden und die dann anstehenden Werte der Multiturngeber 09 als Nullposition bzw. Referenzwinkelposition abgespeichert werden. Dies kann über eine geeignete Software z. B. des Maschinenleitstands 11 oder eines geeigneten, anderweitigen Rechners 11 erfolgen. Auf der Basis der Daten dieser Referenzwinkelpositionen und der Daten der Multiturngeber 09 ist die Antriebssteuerung 08 dann in der Lage, zu jedem Zeitpunkt die aktuellen Winkellagen der Zylinder 02; 03 zu berechnen.

Die errechneten Winkellagen müssen bei Anlagenstillständen oder Stromausfällen von der Antriebssteuerung 08 abgespeichert werden, um diese nicht zu verlieren und ein problemloses Wiederanfahren der Druckmaschine zu gewährleisten. Schlägt das Abspeichern fehl oder verliert die Antriebssteuerung 08 die Winkellagen der Zylinder 02; 03 aus einem anderen Grund, so muss erneut der Bezug der Winkellagen der Zylinder 02; 03 und Multiturngeber 09 abgeglichen werden, d. h. die Zylinder 02; 03 in die Referenzwinkelposition verbracht und die entsprechenden Signale der Multiturngeber 09 abgespeichert werden.

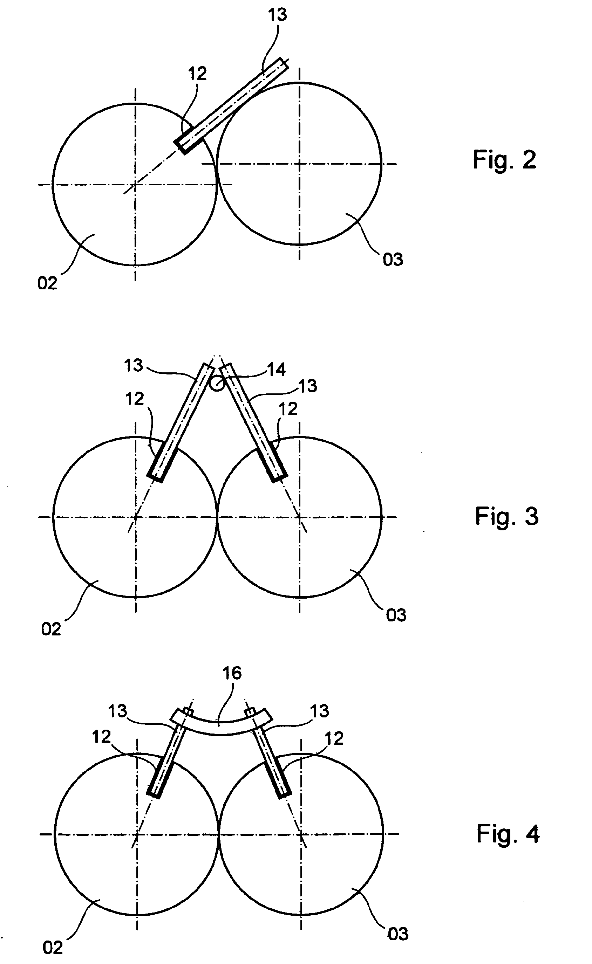

Im Folgenden wird unter Bezugnahme auf Fig. 2 bis 6 erläutert, auf welche Weise die Referenzwinkelpositionen der Zylinder, beispielsweise der Zylinder 02; 03 gemäß Fig. 1 oder anderer Zylinder einer Druckmaschine, unter Verwendung einer Ausrichtvorrichtung 12, 13 bzw. 16 realisiert werden. Es versteht sich, dass ein, zwei, drei oder mehrere Zylinder entsprechend ausgerichtet werden können.

Allen Ausführungsformen nach Fig. 2 bis 6 ist vorzugsweise gemeinsam, dass in einem Randbereich eines auszurichtenden Zylinders 02; 03 in definierter Winkellage eine sich radial erstreckende Passbohrung 12 ausgebildet ist, in die ein Passbolzen 13 bzw. Passstange 13 einsetzbar ist.

Bei der Ausführungsform nach Fig. 2 schlägt der in die Passbohrung 12 des Zylinders 02 eingesetzte Passbolzen 13 bzw. Passstange 13 am Umfang bzw. Ballen des benachbarten Zylinders 03 an, wodurch der Zylinder 02 seine Referenzwinkelposition einnimmt. Diese Ausführungsform ist besonders geeignet für Druckmaschinen mit Einzelantriebstechnik. Hiermit ist eine durchmesserunabhängige und sehr gut reproduzierbare Festlegung der Referenzwinkelposition möglich, die auf den ohnehin äußerst genauen Zylinderpositionen und Zylinderdurchmessern beruht.

Bei der Ausführungsform nach Fig. 3 weisen beide Zylinder 02; 03 jeweils eine Passbohrung 12 auf, in die jeweils ein Passbolzen 13 bzw. eine Passstange 13 eingesetzt ist. Die beiden Passbolzen 13 bzw. Passstangen 13 der beiden Zylinder 02; 03 schlagen hier an einem externen festen Bezugspunkt 14, beispielsweise einem maschinenfesten Anschlag 14 an, wodurch eine räumliche Festlegung beider Zylinder 02; 03 erfolgt und somit beide Zylinder 02; 03 ihre Referenzwinkelpositionen einnehmen.

Auch diese Ausführungsform ist unabhängig vom Zylinderdurchmesser. Selbstverständlich können auch beide Zylinder 02; 03 gleichzeitig auf entsprechende Weise ausgerichtet werden. Auch ist es möglich, zwischen den Passbolzen 13 bzw. Passstangen 13 und den externen Bezugspunkt 14 geeignete Lehren zwischenzuschalten.

Bei der Ausführungsform nach Fig. 4 weisen wiederum beide Zylinder 02; 03 jeweils eine Passbohrung 12 auf, in die jeweils ein Passbolzen 13 bzw. Passstange 13 eingesetzt ist. An den freien Enden der beiden Passbolzen 13 bzw. Passstangen 13 ist eine Lehre 16 ansetzbar, die einen vorgegebenen Winkel zwischen den beiden Passbolzen 13 bzw. Passstangen 13 definiert. In der gezeigten Position nehmen die beiden Zylinder 02; 03 somit ihre Referenzwinkelpositionen ein und sind in fester Position zueinander ausgerichtet.

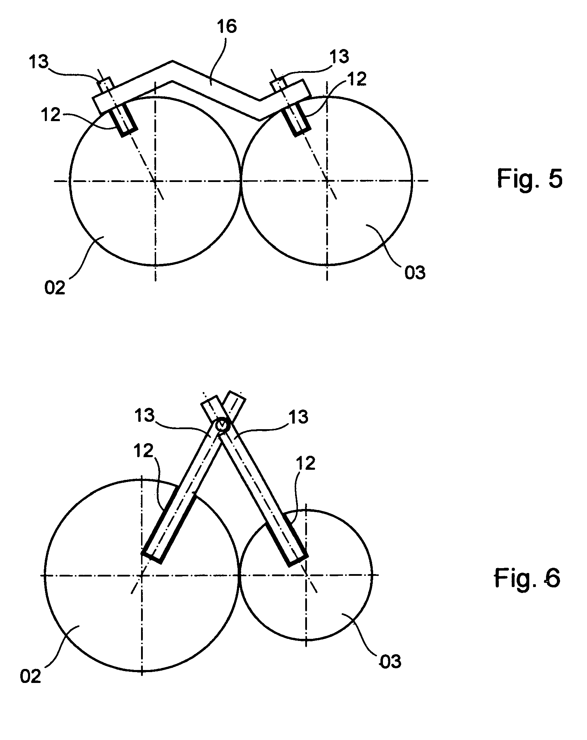

Die Ausführungsform nach Fig. 5 zeigt eine Variante zur Ausführungsform nach Fig. 4, bei der eine auf die Passbolzen 13 bzw. Passstangen 13 der Zylinder 02; 03 aufsetzbare Lehre 16 verwendet wird und die Passbolzen 13 bzw. Passstangen 13 in der Referenzwinkellage der Zylinder 02; 03 parallel ausgerichtet sind. Auch hier sind die Zylinder 02; 03 in fester räumlicher Lage zueinander ausgerichtet. Es ist offensichtlich, dass sich diese Anordnung auf drei und mehr Zylinder erweitern lässt.

Aus den Ausführungsformen nach Fig. 4 und 5 wird deutlich, dass die in die Zylinder eingebrachten Passbohrungen zweier oder mehrerer Zylinder durch eine entsprechende, zylinderdurchmesserunabhängige Lehre in beliebigen Winkellagen zueinander ausgerichtet werden können. Es ist problemlos möglich, über die Variation der Passbohrungslage und der zugehörigen Lehren auf die unterschiedlichen Belange der verschiedenen Maschinenkonfigurationen einzugehen, z. B. einzelnes Festlegen der Zylinder oder mehrfaches Festlegen, Lehrenvariation bei unterschiedlicher Zugänglichkeit oder unterschiedlichem Montage- und Arbeitsablauf usw.

Bei der Ausführungsform nach Fig. 6 weisen wiederum beide Zylinder 02; 03 eine Passbohrung 12 auf, in die jeweils ein Passbolzen 13 bzw. Passstange 13 eingesetzt ist. Die Passbolzen 13 bzw. Passstangen 13 der beiden Zylinder 02; 03 schlagen hier aneinander an, wodurch die beiden Zylinder 02; 03 in räumlich fester Position zueinander ausgerichtet sind und die jeweilige Referenzwinkelposition einnehmen.

Wie des Weiteren aus Fig. 6 deutlich wird, ist es auch möglich, mehrere Zylinder 02; 03 mit deutlich unterschiedlichem Durchmesser mit durchmesserunabhängigen Lehren aufeinander auszurichten, indem man die Tiefen der Passbohrungen 12 in den Zylindern 02; 03 nach speziellen Regeln wählt, z. B. dahingehend, dass der Bohrungsgrund jeweils den gleichen Abstand zur Zylinderachse aufweist. In diese Passbohrungen 12 können dann Lehren mit speziell ausgebildeten Anschlagsflächen eingesteckt werden, deren Abstand Anschlagsfläche zu Aufstandsfläche gleich ist. Hierdurch kann man erreichen, dass die Anschlagsflächen der in die Zylinder 02; 03 eingesteckten Lehren immer einen Abstand zu den Zylinderachsen haben, der einem gewünschten Verhältnis entspricht, z. B. Kontaktpunkt über Zylinderberührungspunkt oder auf der Mittelsenkrechten.

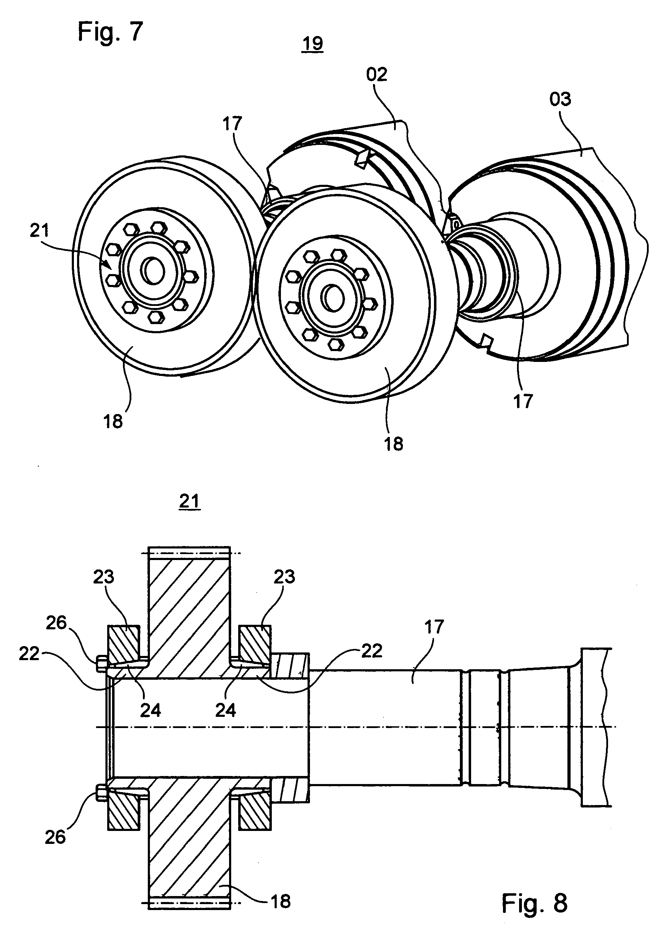

Gemäß einer Ausführungsform der Erfindung ist am Zapfen 17 des jeweils auszurichtenden Zylinders 02 und/oder 03 ein Zahnrad 18 reibschlüssig befestigt, vgl. auch Fig. 7. Zum Festlegen der Referenzwinkellage des jeweiligen Zylinders 02; 03 wird zunächst die reibschlüssige Verbindung zwischen Zapfen 17 und Zahnrad 18 gelöst, dann der Zylinder 02; 03 unter Beibehaltung der Winkelposition des Zahnrads 18 mittels der Ausrichtvorrichtung 12, 13 bzw. 16 in die Referenzwinkellage gebracht und dann unter Beibehaltung dieser Referenzwinkellage die reibschlüssige Verbindung zwischen Zapfen 17 und Zahnrad 18 wieder hergestellt. Fig. 7 zeigt ein Beispiel eines Druckwerks 19 mit zwei Zylindern 02; 03, beispielsweise einem Formzylinder 02 und einem Übertragungszylinder 03, auf deren Zapfen 17 jeweils ein Zahnrad 18 reibschlüssig befestigt ist, wobei die beiden Zahnräder 18 miteinander kämmen.

Zur reibschlüssigen und spielfreien Verbindung zwischen Zapfen 17 und Zahnrad 18 ist jeweils eine Spanneinrichtung 21, insbesondere eine selbstzentrierende Ringspanneinrichtung 21 vorgesehen, deren Aufbau auch aus Fig. 8 deutlich wird. Demnach ist das Zahnrad 18 mit einem in axialer Richtung beidseitig vorstehenden Hohlwellenabschnitt 22 versehen, der auf den Zapfen 17 aufgeschoben ist. Auf den beiden radial vorstehenden Hohlwellenabschnitten 22 sind Spannelemente 23; 24, z. B. Ringspannelemente 23; 24 aufgesetzt, die einen äußeren Stufenkegelring 23 und eine innere Stufenkegelbüchse 24 umfassen, wobei deren Kontaktflächen konisch ausgebildet sind. Mittels Spannschrauben 26 werden die Ringspannelemente 23; 24 verspannt und somit das Zahnrad 18 in der gewünschten Winkellage am Zapfen 17 kraft- bzw. reibschlüssig fixiert.

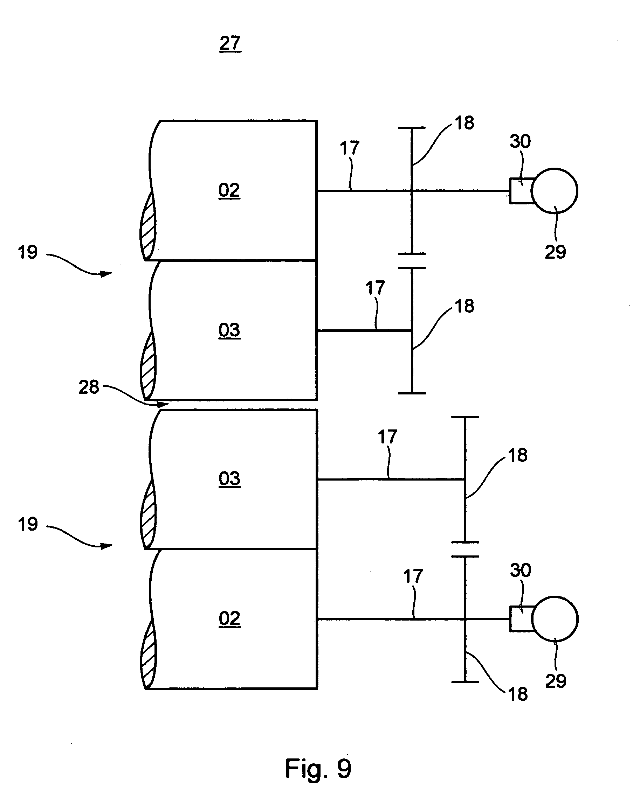

Fig. 9 zeigt eine Druckeinheit 27, welches zwei Druckwerke 19 umfasst, die jeweils einen ersten Zylinder 02, z. B. einen Formzylinder 02 und einen zweiten Zylinder 03, z. B. einen Übertragungszylinder 03 aufweisen. Die beiden Druckwerke 19 bilden zusammen eine Doppeldruckeinheit 27, wobei zwischen den beiden Übertragungszylindern 02 ein Druckspalt 28 zum doppelseitigen Bedrucken einer nicht dargestellten Bedruckstoffbahn definiert ist.

Die Zylinder 02; 03 eines jeden Druckwerks 19 sind jeweils von einen Antrieb 29, z. B einem Elektromotor 29, ggf. unter Zwischenschaltung eines Getriebes 30, gemeinsam angetrieben, wobei vom Formzylinder 02 auf den Übertragungszylinder 03 über eine formschlüssige Antriebsverbindung angetrieben wird, die beispielsweise von den Zahnrädern 18 gemäß Fig. 7 gebildet sein kann. Die Zahnräder 18 sind ausschließlich kraftschlüssig bzw. reibschlüssig mit den jeweiligen Zapfen 17 der Zylinder 02; 03 verbunden, beispielsweise in der im Zusammenhang mit Fig. 7 und 8 beschriebenen Weise. Der Antrieb 29 des einen Druckwerks 19 befindet sich nicht in formschlüssigem Antriebsverbund mit dem Antrieb 29 des anderen Druckwerks 19.

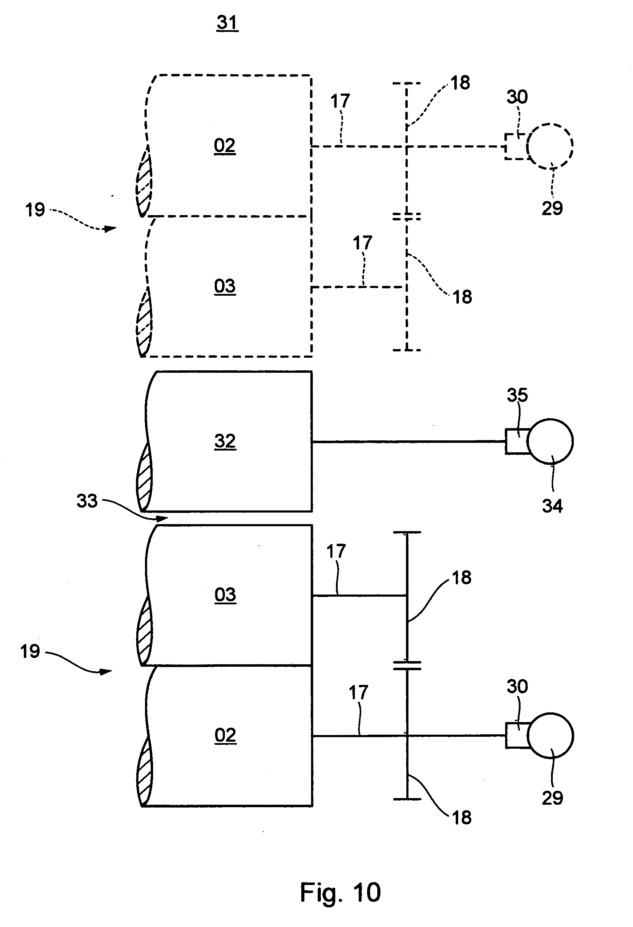

Fig. 10 zeigt eine weitere Druckeinheit 31, welches ein Druckwerk 19 umfasst, die einen ersten Zylinder 02, z. B. einem Formzylinder 02 und einen zweiten Zylinder 03, z. B. einen Übertragungszylinder 03 aufweist. Weiterhin ist ein dritter Zylinder 32, insbesondere ein Gegendruckzylinder 32 vorgesehen, wobei zwischen Übertragungszylinder 03 und Gegendruckzylinder 32 ein Druckspalt 33 zum einseitigen Bedrucken einer nicht dargestellten Bedruckstoffbahn definiert ist.

Die Zylinder 02; 03 des Druckwerks 19 sind von einem Elektromotor 29 gemeinsam angetrieben, wobei vom Formzylinder 02 auf den Übertragungszylinder 03 über eine formschlüssige Antriebsverbindung angetrieben wird, die beispielsweise von den Zahnrädern 18 gemäß Fig. 7 gebildet sein kann. Die Zahnräder 18 sind ausschließlich kraftschlüssig bzw. reibschlüssig mit den jeweiligen Zapfen 17 der Zylinder 02; 03 verbunden, beispielsweise in der im Zusammenhang mit Fig. 7 und 8 beschriebenen Weise. Der Gegendruckzylinder 32 ist von einem eigenen Antrieb 34, z. B. Elektromotor 34, ggf. unter Zwischenschaltung eines Getriebes 35, angetrieben. Der Antrieb 29 des Druckwerks 19 befindet sich nicht in formschlüssigem Antriebsverbund mit dem Antrieb 34 des Gegendruckzylinders 32.

Der Gegendruckzylinder 32 kann auch ein Satellitenzylinder 32 sein. In diesem Fall sind dem Gegendruckzylinder 32 mehrere Druckwerke 19 zugeordnet, wie in Fig. 10 durch die gestrichelten Linien angedeutet ist. Insbesondere können dem Satellitenzylinder 32 vier Druckwerke 19 zugeordnet sein, wodurch ein 9-Zylinder-Satelliten-Druckeinheit 31 gebildet wird. Die Antriebe 29 der Druckwerke 19 befinden sich weder untereinander noch mit dem Antrieb 34 des Satellitenzylinders in 32 formschlüssigem Antriebsverbund.

Die Formzylinder 02 und/oder Übertragungszylinder 03 weisen mindestens einen Kanal zur Aufnahme eines Aufzugs, z. B. einer Druckplatte oder eines Gummituchs auf. Die Referenzwinkellage, insbesondere die Passbohrung 12, ist relativ zu diesem Kanal festgelegt.

Sind, insbesondere in einem Druckwerk 19, Formzylinder 02 und Übertragungszylinder 03 mittels Zahnräder 18 formschlüssig miteinander in Antriebsverbindung und wird dieses Druckwerk 19 von einen eigenen Antriebsmotor 29 angetrieben, werden beispielsweise die Zylinder 02; 03 in ihrer Referenzposition zueinander gebracht. Anschließend wird zumindest ein Zahnrad 18 oder beide Zähnräder 18 auf dem zugehörigen Zapfen 17 fixiert und diese Referenzposition dem Antriebsmotor 29, z. B. durch Abspeichern in der Antriebssteuerung 08 zugeordnet.

In einer bevorzugten Form weisen alle Zylinder in der Druckeinheit 27, 31 zumindest eine Passöffnung 12, insbesondere eine Passbohrung 12 auf.

### Bezugszeichenliste

- 01: Druckwerk
- 02: Zylinder, Formzylinder
- 03: Zylinder, Übertragungszylinder
- 04: Antrieb, Elektromotor
- 05: -
- 06: Antrieb, Elektromotor
- 07: Kupplung
- 08: Antriebssteuerung
- 09: Winkelgeber, Multiturngeber
- 10: -
- 11: Maschinenleitstand, Rechner
- 12: Passbohrung
- 13: Passbolzen, Passstange
- 14: Bezugspunkt, externer, Anschlag
- 15: -
- 16: Lehre
- 17: Zapfen
- 18: Zahnrad
- 19: Druckwerk
- 20: -
- 21: Spanneinrichtung, Ringspanneinrichtung
- 22: Hohlwellenabschnitt
- 23: Spannelement, Ringspannelement, Stufenkegelring
- 24: Spannelement, Ringspannelement, Stufenkegelbüchse
- 25: -
- 26: Spannschraube
- 27: Druckeinheit, Doppeldruckeinheit
- 28: Druckspalt
- 29: Antrieb, Elektromotor
- 30: Getriebe
- 31: Druckeinheit, 9-Zylinder-Satelliten-Druckeinheit
- 32: Zylinder, Gegendruckzylinder, Satellitenzylinder
- 33: Druckspalt
- 34: Antrieb, Elektromotor
- 35: Getriebe

## Patentansprüche

1. Verfahren zum reproduzierbaren Festlegen der räumlichen Winkellage mindestens eines Zylinders (02; 03) einer Druckmaschine, wobei dem Zylinder (02; 03) ein Antrieb (04; 06; 29; 34) zugeordnet ist, wobei mindestens ein Zylinder (02; 03) mittels einer mit dem Zylinder (02; 03) zusammenwirkenden Ausrichtvorrichtung (12, 13; 16) in eine Referenzwinkellage verbracht wird und diese Referenzwinkellage dem zugeordneten Antrieb (04; 06; 29; 34) zugeordnet wird, wobei mindestens zwei Zylinder (02; 03) positioniert werden und jedem Zylinder (02; 03) ein Antrieb (04; 06; 29; 34) zugeordnet wird, wobei die Referenzwinkellage dem Elektromotor (04; 06; 29; 34) zugeordnet abgespeichert wird, wobei jedem Zylinder (02; 03) ein eigener, lagegeregelter, nicht in formschlüssiger Antriebsvorrichtung mit anderen Zylindern befindlicher Elektromotor (04; 06; 29; 34) zugeordnet wird, wobei die mindestens zwei Zylinder (02; 03) als Formzylinder (02) und Übertragungszylinder (03) eines Druckwerkes (01) ausgebildet sind.

2. Verfahren nach Anspruch 1, **dadurch gekennzeichnet, dass** mindestens einer der beiden Zylinder (02; 03) an seinem Zapfen (17) ein mit seinem Antrieb (04; 06; 29; 34) formschlüssig verbundenes Zahnrad (18) aufweist, welches reibschlüssig am Zapfen (17) befestigt wird.

3. Verfahren nach Anspruch 2, **dadurch gekennzeichnet, dass** bei Beibehaltung der Winkelposition des Zahnrads (18), die reibschlüssige Verbindung zwischen Zapfen (17) und Zahnrad (18) aufgehoben wird, der Zylinder (02; 03) dann in die Referenzwinkellage gebracht wird und anschließend unter Beibehaltung der Referenzwinkellage die reibschlüssige Verbindung zwischen Zapfen (17) und Zahnrad (18) wieder hergestellt wird.

4. Verfahren nach Anspruch 1 oder 2, **dadurch gekennzeichnet, dass** die räumliche Winkellage mindestens zweier Zylinder (02; 03) zueinander festgelegt wird.

5. Verfahren nach Anspruch 1 oder 4, **dadurch gekennzeichnet, dass** die Zylinder (02; 03) in eine Winkellage zueinander gebracht werden, in der sie der von der Ausrichtvorrichtung (12, 13; 16) vorgegebenen Referenzwinkellage entsprechen.

6. Verfahren nach Anspruch 5, **dadurch gekennzeichnet, dass** die zueinander in ihre Referenzwinkellage verbrachten Zylinder (02; 03) in dieser Lage mittels der Ausrichtvorrichtung (12, 13; 16) miteinander formschlüssig verbunden werden.

7. Verfahren nach Anspruch 1, **dadurch gekennzeichnet, dass** die Ausrichtvorrichtung (12, 13) in Anschlag mit einem anderen Bauteil gebracht wird, wodurch die Referenzwinkellage definiert wird.

8. Verfahren nach Anspruch 1, **dadurch gekennzeichnet, dass** in eine am Zylinder (02; 03) ausgebildete Passbohrung (12) ein Passbolzen (13) eingesetzt wird und der Passbolzen (13) in Anschlag mit einem ortsfesten Bauteil gebracht wird.

9. Verfahren nach Ansprüchen 1, 4 oder 8, **dadurch gekennzeichnet, dass** bei mindestens zwei Zylindern (02; 03) in eine an jedem Zylinder (02; 03) ausgebildete Passbohrung (12) jeweils ein Passbolzen (13) eingesetzt wird und die Passbolzen (13) mit einer die räumliche Winkellage der Zylinder (02; 03) zueinander vorgebenden Lehre (16) verbunden werden.

10. Verfahren nach Anspruch 1, **dadurch gekennzeichnet, dass** die Referanzwinkellage relativ zu mindestens einen einen Aufzug aufnehmenden Kanal festgelegt wird.

11. Verfahren nach Anspruch 1, **dadurch gekennzeichnet, dass** mittels einer Antriebssteuerung (08) die Antriebe (04; 06; 29; 34) winkelsynchron gesteuert werden.

12. Verfahren nach Anspruch 1, **dadurch gekennzeichnet, dass** eine an mindestens einem Zylinder (02; 03) in definierter Position befestigbare Ausrichtvorrichtung (12, 13; 16) angeordnet ist.

## Claims

1. Method for reproducibly determining the spatial angular position of at least one cylinder (02; 03) of a printing press, a drive (04; 06; 29; 34) being coordinated with the cylinder (02; 03), at least one cylinder (02; 03) being brought into a reference angle position by means of an orientation device (12; 13; 16) cooperating with the cylinder (02; 03) and this reference angle position being coordinated with the coordinated drive (04; 06; 29; 34), at least two cylinders (02; 03) being positioned and a drive (04; 06; 29; 34) being coordinated with each cylinder (02; 03), the reference angle position being stored in coordination with the electric motor (04; 06; 29; 34), a separate, position-controlled electric motor (04; 06; 29; 34) not present in an interlocking drive device with other cylinders being coordinated with each cylinder (02; 03), the at least two cylinders (02; 03) being in the form of a forme cylinder (02) and transfer cylinder (03) of a printing unit (01).

2. Method according to Claim 1, **characterized in that** at least one of the two cylinders (02; 03) has, on its journal (17), a gear wheel (18) which has an interlocking connection to its drive (04; 06; 29; 34) and is fixed by means of friction to the journal (17).

3. Method according to Claim 2, **characterized in that**, while maintaining the angular position of the gear wheel (18), the frictional connection between journal (17) and gear wheel (18) is eliminated, the cylinder (02; 03) is then brought to the reference angle position and then, while maintaining the reference angle position, the frictional connection between journal (17) and gear wheel (18) is restored.

4. Method according to Claim 1 or 2, **characterized in that** the spatial angular position of at least two cylinders (02; 03) relative to one another is determined.

5. Method according to Claim 1 or 4, **characterized in that** the cylinders (02; 03) are brought into an angular position relative to one another in which they correspond to the reference angle position specified by the orientation device (12, 13; 16).

6. Method according to Claim 5, **characterized in that** the cylinders (02; 03) brought into their reference angle position relative to one another are connected to one another in an interlocking manner in this position by means of the orientation device (12, 13; 16).

7. Method according to Claim 1, **characterized in that** the orientation device (12, 13) is caused to come into contact with another component, with the result that the reference angle position is defined.

8. Method according to Claim 1, **characterized in that** a close tolerance bolt (13) is inserted into a hole (12) cut to accurate size and formed in the cylinder (02; 03) and the close tolerance bolt (13) is caused to come into contact with a stationary component.

9. Method according to Claim 1, 4 or 6, **characterized in that**, in the case of at least two cylinders (02; 03), in each case a close tolerance bolt (13) is inserted into a hole (12) cut to accurate size and formed in each cylinder (02; 03) and the close tolerance bolts (13) are connected to a gauge (16) specifying the spatial angular position of the cylinders (02; 03) relative to one another.

10. Method according to Claim 1, **characterized in that** the reference angle position is determined relative to at least one channel receiving a packing.

11. Method according to Claim 1, **characterized in that** the drives (04; 06; 29; 34) are controlled with angle synchronization by means of a drive control (08).

12. Method according to Claim 1, **characterized in that** an orientation device (12, 13; 16) which can be fixed in a defined position on at least one cylinder (02; 03) is disposed.

## Revendications

1. Procédé pour déterminer de façon reproductible la position angulaire spatiale d'au moins un cylindre (02 ; 03) d'une machine à imprimer, un entraînement (04 ; 06 ; 29 ; 34) étant associé au cylindre (02 ; 03), au moins un cylindre (02 ; 03) étant placé en une position angulaire de référence à l'aide d'un dispositif d'orientation (12 ; 13 ; 16) coopérant avec le cylindre (02 ; 03), et cette position angulaire de référence étant associée à l'entraînement (04 ; 06 ; 29 ; 34) associé, où au moins deux cylindres (02 ; 03) sont positionnés et un entraînement (04 ; 06 ; 29 ; 34) étant associé à chaque cylindre (02 ; 03), la position angulaire de référence étant mémorisée, associée au moteur électrique (04 ; 06 ; 29 ; 34), un moteur électrique (04 ; 06 ; 29 ; 34) propre, équipé d'une régulation de position, ne se trouvant pas dans un dispositif d'entraînement à liaison à ajustement de forme avec d'autres cylindres, étant associé à chaque cylindre (02 ; 03), les au moins deux cylindres (02 ; 03) étant réalisés sous forme de cylindre de forme (02) et de cylindre de transfert (03) d'un groupe d'impression.

2. Procédé selon la revendication 1, **caractérisé en ce qu'**au moins l'un des deux cylindres (02 ; 03) présente sur son tourillon (17) une roue dentée (18) reliée par une liaison à ajustement de forme à son entraînement (04 ; 06 ; 29 ; 34) et fixée, par une liaison par friction, sur le tourillon (17).

3. Procédé selon la revendication 2, **caractérisé en ce que**, lors de la conservation de la position angulaire de la roue dentée (18), la liaison par friction entre tourillon (17) et roue dentée (18) est supprimée, le cylindre (02 ; 03) est ensuite placé dans la position angulaire de référence et ensuite, en conservant la position angulaire de référence, la liaison par friction entre tourillon (17) et roue dentée (18) est rétablie.

4. Procédé selon la revendication 1 ou 2, **caractérisé en ce que** la position angulaire spatiale mutuelle d'au moins deux cylindres (02 ; 03) est déterminée.

5. Procédé selon la revendication 1 ou 4, **caractérisé en ce que** les cylindres (02 ; 03) sont placés en une position angulaire mutuelle dans laquelle ils correspondent à la position angulaire de référence prédéterminée par le dispositif d'orientation (12 ; 13 ; 16).

6. Procédé selon la revendication 5, **caractérisé en ce que** les cylindres (02 ; 03) placés à leur position angulaire mutuelle sont reliés ensemble, par une liaison à ajustement de forme, dans cette position à l'aide du dispositif d'orientation (12 ; 13; 16).

7. Procédé selon la revendication 1, **caractérisé en ce que** le dispositif d'orientation (12 ; 13 ; 16) est placé en butée avec un autre composant, faisant que la position angulaire de référence est définie.

8. Procédé selon la revendication 1, **caractérisé en ce qu'**un boulon ajusté (13) est inséré dans un perçage à tolérances serrées (12) réalisé sur le cylindre (02 ; 03), et le boulon ajusté (13) est mis en butée avec un composant localement fixe.

9. Procédé selon la revendication 1, 4 ou 8, **caractérisé en ce que**, dans le cas d'au moins deux cylindres (02 ; 03), un boulon ajusté (13) est chaque fois inséré dans un perçage à tolérances serrées (12) réalisé sur chaque cylindre (02 ; 03), et le boulon ajusté (13) est relié à un gabarit (16) prédéterminant la position angulaire spatiale mutuelle des cylindres (02 ; 03).

10. Procédé selon la revendication 1, **caractérisé en ce que** la position angulaire de référence est déterminée par rapport à au moins un canal recevant un habillage.

11. Procédé selon la revendication 1, **caractérisé en ce que** les entraînements (04 ; 06 ; 29 ; 34) sont commandés de manière angulairement synchrone, à l'aide d'une commande d'entraînement (08).

12. Procédé selon la revendication 1, **caractérisé en ce qu'**un dispositif d'orientation (12 ; 13 ; 16) susceptible d'être fixé en position définie est disposé sur au moins un cylindre (02 ; 03).
